# EUROPEAN PATENT SPECIFICATION

(11) **EP 2 869 001 B1**
(45) Date of publication and mention of the grant of the patent: **14.03.2018**
(21) Application number: 13810107.6
(22) Date of filing: 20.06.2013
(51) Int. Cl.: F25B 49/02, B60H 1/32, B60H 1/00, F25B 49/00

(54) **HEAT PUMP CYCLE**
WÄRMEPUMPENKREISLAUF
CYCLE DE POMPE À CHALEUR

(30) Priority: 28.06.2012 JP 2012146058
(43) Date of publication of application: 06.05.2015
(73) Proprietor: DENSO CORPORATION, Kariya-city, Aichi 448-8661 (JP)
(72) Inventor: TAHARA, Toshihiro, Kariya-city Aichi 448-8661 (JP)
(74) Representative: Vigand, Philippe
(86) International application number: PCT/JP2013/003846
(87) International publication number: WO 2014/002441

(56) References cited:
- EP-A2- 0 768 198
- JP-A- H08 313 123
- JP-A- S61 213 565
- JP-A- 2002 333 186
- JP-A- 2004 245 457
- JP-A- 2009 024 923
- JP-A- 2011 017 526
- JP-B2- 3 279 001
- US-A1- 2011 016 896
- US-A1- 2011 167 850
- US-B1- 6 266 965

## Description

### CROSS-REFERENCE TO RELATED APPLICATION

The present application is based on Japanese Patent Application No. 2012-146058, filed on June 28, 2012, the contents of which are incorporated by reference herein.

### Technical Field

This disclosure relates to a heat pump cycle that heats a fluid with heat absorbed from an outside air.

### Background Art

Up to now, a refrigeration cycle (heat pump cycle) of a vapor compression type has been known which is applied to an air conditioning system, and cools a blown air that is blown to a space to be air-conditioned. In the heat pump cycle of this type, if a refrigerant is leaked to an external, or if a flow rate of refrigerant circulating in a cycle is reduced at a low outside air temperature, the return amount of refrigerant oil that circulates in the cycle and returns to a compressor with the refrigerant may be reduced to adversely affect a durability life of the compressor.

On the contrary, the heat pump cycle of Japanese Patent No. 3279001 stops the compressor for protection of the compressor when determining that the heat pump cycle is in a refrigerant shortage state where the refrigerant flow rate is as low as the durability life of the compressor is adversely affected, or when the outside air temperature is low (specifically, the outside air temperature is lower than -5°C).

In more detail, in the heat pump cycle of Japanese Patent No. 3279001 in the case where the outside air temperature is equal to or higher than 0°C, it is determined that the refrigerant is in a shortage state if a high pressure side refrigerant pressure between a refrigerant discharge port of the compressor and a refrigerant inlet of an expansion valve forming a decompression unit is equal to or lower than a first reference pressure in a state where the compressor stops. In the case where the high pressure side refrigerant pressure is likely to be low such that the outside air temperature is in a range lower than 0°C and higher than or equal to -5°C, it is determined that the refrigerant is in the shortage state if the high pressure side refrigerant pressure is equal to or lower than a second reference pressure after the compressor has operated for 3 to 10 seconds.

Incidentally, since the heat pump cycle of Japanese Patent No. 3279001 is used for cooling the blown air to cool the space to be air-conditioned, even if the compressor stops at the low outside air temperature so that the heat pump cycle cannot exhibit a cooling capacity, air conditioning feeling (cooling feeling) of a user is not largely impaired.

However, when the heat pump cycle heats the blown air to heat the space to be air-conditioned, there is a need to operate the compressor at the low outside air temperature to exhibit a heating capacity. If it is determined that the refrigerant flow rate is short at the low outside air temperature, and if the compressor stops as disclosed in Japanese Patent No. 3279001, the blown air cannot be heated, and the space to be air-conditioned cannot be heated.

### Citation List

### Patent Literature

US 2011/01677850 discloses a heat pump cycle according to the preamble of claim 1.

### Summary of Invention

This invention aims at providing a heat pump cycle that can heat a fluid to be heated even at a low outside air temperature while inhibiting a duration life of a compressor from being adversely affected.

According to the present invention a heat pump cycle includes: a compressor that compresses and discharges a refrigerant; a heating heat exchanger that heats fluid by exchanging heat between a high pressure refrigerant discharged from the compressor and the fluid to be heated; a decompression unit that decompresses the refrigerant flowing out from the heating heat exchanger; an outdoor heat exchanger that evaporates a low pressure refrigerant decompressed by the decompression unit by exchanging heat between the low pressure refrigerant and an outside air; a refrigerant shortage determination unit that determines that refrigerant is in shortage state in which a flow rate of refrigerant circulating in the cycle is short; and a compressor control unit that controls the operation of the compressor.

The refrigerant shortage determination unit determines that refrigerant is in the shortage state if a high pressure side refrigerant pressure between a refrigerant discharge port of the compressor and an inlet of the decompression unit is lower than a predetermined first reference pressure when an outside air temperature is equal to or higher than a predetermined reference outside air temperature. The refrigerant shortage determination unit determines that refrigerant is in the shortage state if the high pressure side refrigerant pressure is lower than a predetermined second reference pressure in a state where the compressor is operated when the outside air temperature is lower than the reference outside air temperature.

The compressor control unit reduces a refrigerant discharge capacity of the compressor when the refrigerant shortage determination unit determines that refrigerant is in the shortage state.

According to the above configuration, since the compressor control unit reduces a refrigerant discharge capacity of the compressor if the refrigerant shortage determination unit determines that the refrigerant is in the shortage state, the duration life of the compressor can be inhibited from being adversely affected by reducing the return amount of the refrigerant oil.

Further, the refrigerant shortage determination unit determines that the refrigerant is in the shortage state when the high pressure side refrigerant pressure is lower than the second reference pressure in a state where the compressor operates, at the low outside air temperature where the outside air temperature is lower than the reference outside air temperature. Therefore, when the high pressure side refrigerant pressure is equal to or higher than the second reference pressure, the fluid to be heated can be heated even at the low outside air temperature.

As a result, there can be provided the heat pump cycle that can heat the fluid to be heated even at the low outside air temperature while inhibiting the duration life of the compressor from being adversely affected.

The "refrigerant shortage state" means a state in which the refrigerant flow rate is as short as at least the duration life of the compressor is adversely affected. Also, "reduces a refrigerant discharge capacity of the compressor" not only means that the refrigerant discharge capacity of the compressor is reduced, but also includes "stop of the compressor".

Further, the heat pump cycle includes a blower that blows the outside air toward the outdoor heat exchanger, and a blower control unit that controls the operation of the blower. The blower control unit may increase a blowing capacity of the blower when the outside air temperature falls within a predetermined reference temperature range.

For example, when the outside air temperature becomes about -10°C to 0°C, the outdoor heat exchanger is likely to be frosted. Further, when the outdoor heat exchanger is frosted, because the refrigerant is cooled by the outdoor heat exchanger, the refrigerant shortage determination unit may erroneously determine that the refrigerant is in the shortage state.

On the contrary, according to this invention at an outside air temperature where the outdoor heat exchanger is likely to be frosted, frosting can be suppressed with an increase in the blowing capacity of the blower. Therefore, the refrigerant shortage determination unit can be inhibited from erroneously determining that the refrigerant is in the shortage state.

Further, the heat pump cycle may include a blower that blows the outside air toward the outdoor heat exchanger, and a blower control unit that controls the operation of the blower. The blower control unit may increase the blowing capacity of the blower with an increase in a heat load of the cycle.

In this example, when the heat load of the cycle is increased, there is a need to decrease a refrigerant evaporation temperature in the outdoor heat exchanger in order to increase the amount of heat absorbed from the outside air by the refrigerant in the outdoor heat exchanger. Therefore, when the heat load of the cycle increases, the outdoor heat exchanger is likely to be frosted.

On the contrary, according to this invention, as the heat load of the cycle is increased, the blowing capacity of the blower in increased such that the outdoor heat exchanger can be inhibited from being frosted. Therefore, the refrigerant shortage determination unit can be inhibited from erroneously determining that the refrigerant is in the shortage state.

### Brief Description of Drawings

[FIG. 1] FIG. 1 is a diagram illustrating an overall configuration of a vehicle air conditioning system according to an embodiment.
[FIG. 2] FIG. 2 is an illustrative view illustrating a control characteristic in determining a rotating speed of a blowing fan in a control process of the vehicle air conditioning system according to the embodiment.
[FIG. 3] FIG. 3 is a flowchart illustrating a main portion of the control process of the vehicle air conditioning system according to the embodiment. Description of Embodiments

An embodiment of this invention will be described below with reference to the drawings. In this embodiment, a heat pump cycle (refrigeration cycle of a vapor compression type) 10 is applied to a vehicle air conditioning system 1. The heat pump cycle 10 performs a function of cooling or heating a blown air to be blown into a vehicle interior which is a space to be air-conditioned in the vehicle air conditioning system 1. Therefore, a fluid to be subjected to heat exchange is the blown air.

Also, the vehicle air conditioning system 1 according to this embodiment is applied to an electric vehicle that obtains a driving force for vehicle travel from an electric motor for travel. In the electric vehicle, an electric power supplied from an external power supply (commercial power supply) is charged in a battery when the vehicle stops, and the electric power charged in the battery is supplied to the electric motor for travel so that the vehicle travels when the vehicle travels.

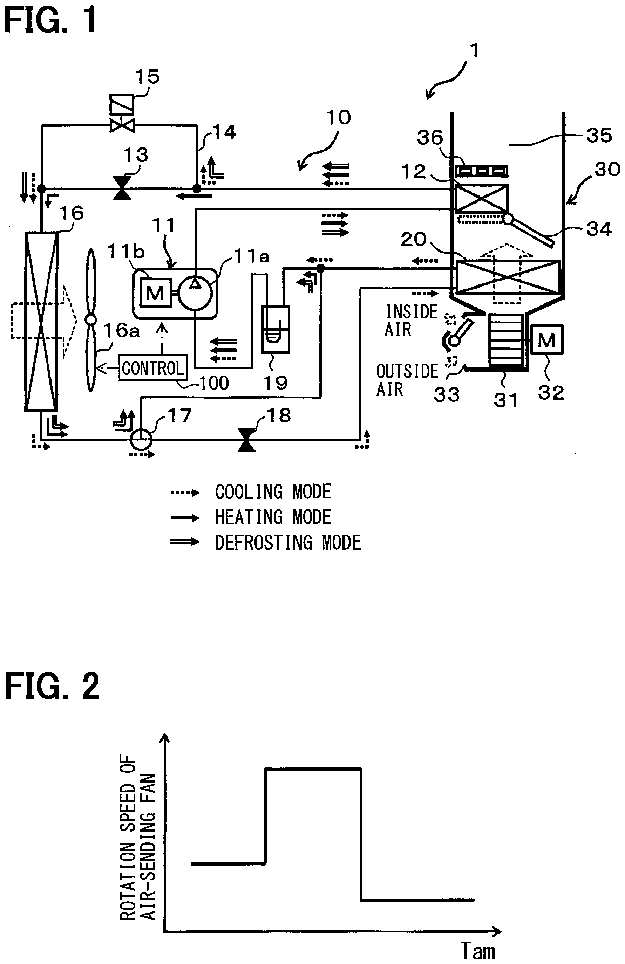

Subsequently, a detailed configuration of the vehicle air conditioning system 1 will be described with reference to FIG. 1. The vehicle air conditioning system 1 according to this embodiment includes the heat pump cycle 10 described above, an indoor air conditioning unit 30 for blowing out the blown air that has been adjusted in temperature by the heat pump cycle 10 into the vehicle interior, and an air conditioning control device 100 that controls the operation of various electric equipments configuring the vehicle air conditioning system 1.

First, the heat pump cycle 10 is switchably configured by a refrigerant circuit of a cooling mode for cooling the blown air to cool the vehicle interior, a refrigerant circuit of a heating mode for heating the blown air to heat the vehicle interior, and a refrigerant circuit of a defrosting mode for defrosting an outdoor heat exchanger 16 when the outdoor heat exchanger 16 functioning as an evaporator that evaporates the refrigerant by the heat pump cycle 10 in the heating mode is frosted.

In FIG. 1, a flow of the refrigerant in the cooling mode is indicated by dashed arrows, a flow of the refrigerant in the heating mode is indicated by solid arrows, and a flow of the refrigerant in the defrosting mode is double line arrows.

The heat pump cycle 10 includes a compressor 11 that compresses and discharges the refrigerant, an indoor condenser 12 and an indoor evaporator 20 as an indoor heat exchanger which function as an indoor heat exchanger that heats or cools the blown air, a heating fixed throttle 13 and a cooling fixed throttle 18 which function as a decompression unit that decompresses and expands the refrigerant, and an on/off valve 15 and a three-way valve 17 which function as a refrigerant circuit switching unit.

Also, the heat pump cycle 10 employs an HFC based refrigerant (specifically, R134a) as the refrigerant, and configures a vapor compression type subcritical refrigeration cycle in which the high pressure side refrigerant pressure does not exceed a critical pressure of the refrigerant. It is needless to say that a HFO based refrigerant (for example, R1234yf) may be employed as the refrigerant. Further, a refrigerant oil for lubricating a sliding portion of the compressor 11 is mixed with the refrigerant, and a part of the refrigerant oil is circulated in the cycle together with the refrigerant.

The compressor 11 is arranged within a vehicle bonnet which is a vehicle exterior, and sucks, compresses, and discharges the refrigerant in the heat pump cycle 10, and is configured as an electric compressor that drives a fixed capacity type compression mechanism 11a having a fixed discharge capacity by an electric motor 11b. Specifically, various compression mechanisms such as a scroll-type compression mechanism and a vane-type compression mechanism can be employed as the fixed capacity type compression mechanism 11a.

The electric motor 11b is an AC motor controlled in operation (rotating speed) by an AC voltage output from an inverter not shown. Also, the inverter outputs an AC voltage of a frequency corresponding to a control signal output from the air conditioning control device 100. The refrigerant discharge capacity of the compressor 11 changes according to the frequency (rotating speed) control. Therefore, the electric motor 11b configures a discharge capacity change unit of the compressor 11.

A refrigerant inlet side of the indoor condenser 12 is connected to a discharge port of the compressor 11. The indoor condenser 12 is a heat exchanger for heating which is arranged within a casing 31 forming an air passage of the blown air which is blown into the vehicle interior in the indoor air conditioning unit 30, and conducts heat exchange between the refrigerant flowing within the casing 31 and the blown air to heat the blown air.

A refrigerant inlet side of the outdoor heat exchanger 16 is connected to a refrigerant outlet side of the indoor condenser 12 through the heating fixed throttle 13. The heating fixed throttle 13 is a decompression unit that decompresses the refrigerant that flows out from the indoor condenser 12 in the heating mode, and can employ an orifice or capillary tube. It is needless to say that the decompression unit is not limited to the fixed throttle, but may be configured by a variable throttle mechanism such as an electric expansion valve with a fully open function if the mechanism can exhibit a function for decompressing the refrigerant in the heating mode.

Further, in this embodiment, a bypass passage 14 is disposed to guide the refrigerant that flows out from the indoor condenser 12 to the refrigerant inlet side of the outdoor heat exchanger 16 while bypassing the heating fixed throttle 13. The on/off valve 15 that opens and closes the bypass passage 14 is arranged in the bypass passage 14.

The on/off valve 15 configures a refrigerant circuit switching unit that switches the refrigerant circuit in the respective operating modes to another, which is an electromagnetic valve operationally controlled according to a control signal output from the air conditioning control device 100. Specifically, the on/off valve 15 according to this embodiment is opened in the cooling mode and the defrosting mode, and closed in the heating mode.

A pressure loss generated when the refrigerant passes through the bypass passage 14 in a state where the on/off valve 15 is opened is extremely smaller than a pressure loss generated when the refrigerant passes through the heating fixed throttle 13 in a state where the on/off valve 15 is closed. Therefore, substantially all flow of the refrigerant that flows out from the outdoor heat exchanger 16 flows into the outdoor heat exchanger 16 side through the bypass passage 14 in the state where the on/off valve 15 is opened.

The outdoor heat exchanger 16 is arranged within the vehicle bonnet, and conducts heat exchange between the refrigerant downstream of the indoor condenser 12 which flows within the outdoor heat exchanger 16, and the vehicle exterior air (outside air) blown from a blowing fan 16a. The blowing fan 16a is an electric blower of which the rotating speed (the blowing capacity) is controlled according to a control voltage output from the air conditioning control device 100.

The refrigerant outlet side of the outdoor heat exchanger 16 is connected with the three-way valve 17. The three-way valve 17 configures a refrigerant circuit switching unit that switches the refrigerant circuit in the above-mentioned respective operating modes to another, together with the on/off value 15, which is an electric three-way valve operationally controlled according to the control signal output from the air conditioning control device 100.

Specifically, the three-way valve 17 switches to the refrigerant circuit that connects the refrigerant outlet side of the outdoor heat exchanger 16 to the cooling fixed throttle 18 as indicated by the dashed arrows in FIG. 1 in the cooling mode. The three-way valve 17 switches to the refrigerant circuit that connects the refrigerant outlet side of the outdoor heat exchanger 16 to the refrigerant inlet side of an accumulator 19 arranged on an inlet side of the compressor 11 as indicated by solid arrows or double line arrows in FIG. 1, in the heating mode and the defrosting mode.

A basic configuration of the cooling fixed throttle 18 is identical with those of the heating fixed throttle 13. The refrigerant outlet side of the cooling fixed throttle 18 is connected with the refrigerant inlet side of the indoor evaporator 20. The indoor evaporator 20 is a heat exchanger for cooling which is arranged on an upstream side of the indoor condenser 12 along the blown air flow within the casing 31 of the indoor air conditioning unit 30, and conducts heat exchange between the refrigerant flowing within the casing 31 and the blown air to cool the blown air.

The refrigerant outlet side of the indoor evaporator 20 is connected with the inlet side of the accumulator 19. The accumulator 19 is a gas-liquid separator that separates gas and liquid of the refrigerant that flows into the accumulator 19 from each other, and stores an excess refrigerant within the cycle. Further, the gas-phase refrigerant outlet of the accumulator 19 is connected with the inlet side of the compressor 11.

Subsequently, the indoor air conditioning unit 30 will be described. The indoor air conditioning unit 30 is arranged inside of an instrument panel in a foremost portion of the vehicle interior, and a blower 32, the above indoor evaporator 20, the indoor condenser 12, and an air mixture door 34 are housed in the casing 31 that forms an outer shape of the indoor air conditioning unit 30.

The casing 31 forms the air passage of the vehicle interior blown air which is blown into the vehicle interior, and is made of a plastic material (for example, polypropylene) having some degree of elasticity and is excellent in strength. An inside/outside air switching device 33 is arranged on a most upstream side of the air blowing flow within the casing 31 as an inside/outside air switching unit that switchably introduces the inside air (vehicle interior air) and the outside air (vehicle exterior air) into the casing 31.

The inside/outside air switching device 33 continuously adjusts opening areas of an inside air feed port for introducing the inside air into the casing 31, and an outside air feed port for introducing the outside air into the casing 31 by an inside/outside air switching door to continuously change a flow proportion of an inside air flow rate and an outside air flow rate. The inside/outside air switching door is driven by an electric actuator for the inside/outside air switching door, and the electric actuator is controlled in operation according to a control signal output from the air conditioning control device 100.

The blower (blower) 32 that blows the air sucked through the inside/outside air switching device 33 toward the vehicle interior is arranged on the downstream side of the inside/outside air switching device 33 along the air flow. The blower 32 is an electric blower that drives a multi-blade centrifugal fan (sirocco fan) with the help of an electric motor, and is controlled in rotating speed (air flow rate) according to a control voltage output from the air conditioning control device 100.

The indoor evaporator 20 and the indoor condenser 12 described above are arranged on the downstream side of the blower 32 along the air flow in the stated order of the indoor evaporator 20 and the indoor condenser 12 along the flow of the blown air. In other words, the indoor evaporator 20 is arranged on the upstream side of the indoor condenser 12 along the blown air flow.

Further, the air mixture door 34 that adjusts a flow proportion of the air that passes through the indoor condenser 12 to the blown air that has passed through the refrigerant evaporator 20 is arranged on the downstream side of the refrigerant evaporator 20 along the air flow, and on the upstream side of the indoor condenser 12 along the air flow. Also, a mixture space 35 that mixes the blown air that has been heated by conducting heat exchange with the refrigerant in the indoor condenser 12 with the blown air that has not been heated while bypassing the indoor condenser 12 is disposed on the downstream side of the indoor condenser 12 along the air flow.

Opening holes for blowing out the blown air (conditioned air) mixed in the mixture space 35 into the vehicle interior which is a space to be air-conditioned are arranged on the most downstream portion of the casing 31 along the air flow. Specifically, face opening holes for blowing out the conditioned air toward upper bodies of passengers within the vehicle interior, foot opening holes for blowing out the conditioned air toward feet of the passengers, and defroster opening holes for blowing out the conditioned air toward an inside surface of the vehicle front windshield (none of which are shown) are provided as the opening holes.

Downstream sides of the face opening holes, the foot opening holes, and the defroster opening holes along the air flow are connected to face outlets, foot outlets, and defroster outlets (none of which are shown) disposed in the vehicle interior through ducts forming air passages, respectively.

Therefore, the air mixture door 34 adjusts the proportion of the air flow rate that passes through the indoor condenser 12 to adjust a temperature of the conditioned air mixed in the mixture space 35, and adjust the temperature of the conditioned air blown out from the respective outlets into the vehicle interior. That is, the air mixture door 34 configures a temperature adjustment unit that adjusts the temperature of the conditioned air blown into the vehicle interior.

The air mixture door 34 is driven by an electric actuator for driving the air mixture door, and the electric actuator is controlled in operation according to the control signal output from the air conditioning control device 100.

Further, in the indoor air conditioning unit 30 according to this embodiment, an electric heater (PTC heater) 36 that generates heat according to a control signal output from the air conditioning control device 100 to heat the blown air is arranged on the downstream side of the indoor condenser 12 along the air flow. The PTC heater 36 is an auxiliary heating unit that is supplied with an electric power, and auxiliarily heats the blown air when the temperature of the conditioned air blown out into the vehicle interior cannot sufficiently rise even if the air mixture door 34 is displaced to a maximum heating position for allowing a total flow of the blown air to flow into the indoor condenser 12.

Also, face doors for adjusting the opening areas of the face opening holes, foot doors for adjusting the opening areas of the foot opening holes, and defroster doors for adjusting the opening areas of the defroster opening holes (none of which are shown) are arranged on the upstream sides of the face opening holes, the foot opening holes, and the defroster opening holes along the air flow, respectively.

The face doors, the foot doors, and the defroster doors each configure an opening hole mode switching unit for switching an opening hole mode, are coupled with electric actuators for driving the outlet mode doors through link mechanisms, and rotationally operated in association with the electric actuators. Meanwhile, the operation of the electric actuator is controlled by the control signal that is output from the air-conditioning control device 100.

As the outlet modes switched by an outlet mode switching unit, specifically, there are a face mode for fully opening the face outlets to blow out the air toward the upper bodies of the vehicle interior passengers from the face outlets, a bi-level mode for opening both of the face outlets and the foot outlets to blow out the air toward the upper bodies and the feet of the vehicle interior passengers and, a foot mode for fully opening the foot outlets while opening the defroster outlets to a small opening degree to blow out the air mainly from the foot outlets, and a foot defroster mode for opening the foot outlets and the defroster outlets to the same opening degree to blow out the air from both of the foot outlets and the defroster outlets.

Further, the passenger can manually operate a blowing mode changeover switch disposed on an operation panel to set a defroster mode for fully opening the defroster outlets to blow out the air toward the inside surface of the vehicle front windshield from the defroster outlets.

Subsequently, an electric control unit of this embodiment will be described. The air conditioning control device 100 includes a known microcomputer including a CPU, a ROM and a RAM, and peripheral circuits of the microcomputer. The air conditioning control device 100 conducts various arithmetic processing on the basis of an air conditioning control program stored in the ROM, and controls the operation of various air conditioning control equipments such as an inverter for the compressor 11 connected to an output side of the air conditioning control device 100, the on/off valve 15 and the three-way valve 17 which configure the refrigerant circuit switching unit, the blowing fan 16a, the blower 32, or the above-mentioned various electric actuators.

Also, an input side of the air conditioning control device 100 receives detection signals from an air conditioning control sensor group including an inside air sensor as an inside air temperature detection unit that detects a vehicle interior temperature (inside air temperature) Tr, an outside air sensor as an outside air temperature detection unit that detects a vehicle exterior temperature (outside air temperature) Tam, and a solar radiation sensor as a solar radiation amount detection unit that detects a solar radiation amount Ts with which the vehicle interior is irradiated. The air conditioning control sensor group also includes a discharge temperature sensor that detects a discharge refrigerant temperature Td of refrigerant discharged from the compressor 11, a discharge pressure sensor that detects a discharge refrigerant pressure (high pressure side refrigerant pressure) Pd of refrigerant discharged from the compressor 11, an evaporator temperature sensor that detects a refrigerant evaporation temperature (evaporator temperature) Te in the indoor evaporator 20, a blown air temperature sensor that detects a blown air temperature TAV of the blown air blown into the vehicle interior from the mixture space 35, and an outdoor heat exchanger temperature sensor that detects an outdoor device temperature Ts of the outdoor heat exchanger 16.

Meanwhile, in this embodiment, the discharge refrigerant pressure Pd is a high pressure side refrigerant pressure of the cycle extending from the refrigerant outlet side of the compressor 11 to the inlet side of the cooling fixed throttle 18 in the cooling mode, and is a high pressure side refrigerant pressure of the cycle extending from the refrigerant outlet side of the compressor 11 to the inlet side of the heating fixed throttle 13 in the heating mode. Also, in this embodiment, the blown air temperature sensor that detects the blown air temperature TAV is provided. Alternatively, the blown air temperature TAV may be replaced by a value calculated on the basis of the evaporator temperature Te and the discharge refrigerant temperature Td.

Further, the input side of the air conditioning control device 100 receives operation signals from various air-conditioning operation switches, which are provided on an operation panel disposed in the vicinity of a dashboard positioned at the front portion of the vehicle interior. The various air conditioning operation switches located on the operation panel include, specifically, an operation switch of the vehicle air conditioning system 1, an auto-switch that sets or cancels automatic control of the vehicle air conditioning system 1, an operation mode changeover switch that switches the operation mode, a blowing mode changeover switch that switches the outlet mode, an air flow rate setting switch of the blower 32, and a vehicle interior temperature setting switch as a target temperature setting unit that sets a target temperature Tst within the vehicle interior.

The air conditioning control device 100 is integrated with a control unit that controls various air conditioning configuration devices connected to the output side of the air conditioning control device 100, but a configuration (hardware and software) for controlling the operations of the respective air conditioning configuration devices forms a control unit that controls the operations of the respective air conditioning control devices.

For example, in this embodiment, a configuration (hardware and software) that controls the operation of the compressor 11 in the air conditioning control device 100 configures the compressor control unit, and a configuration (hardware and software) that controls the operation of the blowing fan 16a configures the blower control unit.

Subsequently, the operation of the vehicle air conditioning system 1 according to this embodiment having the above-mentioned configuration will be described. As described above, the vehicle air conditioning system 1 according to this embodiment can switch the operation to the cooling mode for cooling the vehicle interior, the heating mode for heating the vehicle interior, and the defrosting mode for defrosting the frosted outdoor heat exchanger 16. Next, the operation of the above-mentioned operation modes will be described.

### (a) Cooling Mode

The cooling mode starts when the cooling mode is selected by a select switch in a state where the auto-switch of the operation panel turns on. In the cooling mode, the air conditioning control device 100 opens the on/off valve 15, and controls the operation of the three-way valve 17 so as to connect a refrigerant outlet side of the outdoor heat exchanger 16 to a refrigerant inlet side of the cooling fixed throttle 18.

With the above configuration, as indicated by the dashed arrows in FIG. 1, the refrigeration cycle is configured in which the refrigerant circulates in the compressor 11, the indoor condenser 12 (the bypass passage 14), the outdoor heat exchanger 16 (the three-way valve 17), the cooling fixed throttle 18, the indoor evaporator 20, the accumulator 19, and the compressor 11 in the stated order. That is, the refrigeration cycle is configured in which the indoor condenser 12 and the outdoor heat exchanger 16 are allowed to function as the radiator that radiates heat to the refrigerant, and the indoor evaporator 20 is allowed to function as the evaporator that evaporates the refrigerant.

In the configuration of the refrigerant circuit, the air conditioning control device 100 reads the detection signals from the above air conditioning control sensor group, and the operation signals of the operation panel. Then, the air conditioning control device 100 calculates a target blowing temperature TAO that is a target temperature of the air that is blown out into the vehicle interior on the basis of values of the detection signals and the operation signals. Further, the air conditioning control device 100 determines operating states of the various air conditioning control equipments connected to the output side of the air conditioning control device 100 on the basis of the calculated target blowing temperature TAO and the detection signals of the sensor group.

For example, the air flow rate of the blower 32 (that is, a blower motor voltage output to the electric motor of the blower 32) is determined on the basis of the target blowing temperature TAO with reference to a control map stored in the ROM of the air conditioning control device 100 in advance. Specifically, in this embodiment, the air conditioning control device 100 sets the blower motor voltage to a high voltage close to a maximum value in an extremely low temperature range (maximum cooling range) and an extremely high temperature range (maximum heating range) of the target blowing temperature TAO, and controls the air flow rate of the blower 32 to come closer to a maximum air flow rate.

Also, an opening degree of the air mixture door 34 (that is, a control signal output to the electric actuator for driving the air mixture door) is determined so that the blown air temperature TAV comes closer to the target blowing temperature TAO.

Also, the outlet mode (that is, a control signal output to the electric motor for driving the outlet mode door) is determined on the basis of the target blowing temperature TAO with reference to a control map stored in the air conditioning control device 100 in advance. In this embodiment, the outlet mode sequentially switches to the face mode, the bi-level mode, and the foot mode in the stated order as the target blowing temperature TAO rises from the low temperature range to the high temperature range.

Also, the inlet mode (that is, a control signal output to the electric motor of the inside/outside air switching device 33) is determined on the basis of the target blowing temperature TAO with reference to a control map stored in the air conditioning control device 100 in advance. In this embodiment, the outside air mode for introducing the outside air is basically prioritized. However, if the target blowing temperature TAO is within the extremely low temperature range, for example, when the high cooling performance is required, the inside air mode for introducing the inside air is selected.

Also, the air flow rate of the blowing fan 16a (the control voltage output to the blowing fan 16a) is determined on the basis of the outside air temperature Tam with reference to the cooling mode stored in the air conditioning control device 100 in advance. In this embodiment, as illustrated in a control characteristic diagram of FIG. 2, the air conditioning control device 100 determines the air flow rate (air flow capacity) of the blowing fan 16a to increase when the outside air temperature Tam falls within a predetermined reference temperature range (specifically, higher than or equal to -10°C and lower than or equal to 0°C). Further, the air conditioning control device 100 determines the air flow rate (air flow capacity) of the blowing fan 16a to decrease as the vehicle velocity is increased.

Also, in the refrigerant discharge capacity of the compressor 11 (the control signal output to the inverter connected to the electric motor 11b of the compressor 11), the air conditioning control device 100 determines a target evaporation temperature TEO of the refrigerant evaporator temperature Te detected by the evaporator temperature sensor so as not to degrade an air conditioning feeling on the basis of the target blowing temperature TAO with reference to the control map stored in the air conditioning control device 100 in advance.

Further, the air conditioning control device 100 calculates a deviation En(TEO-Te) between the target evaporation temperature TEO and the refrigerant evaporator temperature Te, and obtains a rotating speed variation Δf_C relative to a previous compressor rotating speed fCn-1 in conformity with a fuzzy inference based on a membership function and a rule which are stored in the air conditioning control device 100 in advance with the use of the En(TEO-Te) and a deviation variation rate Edot (En-(En-1)) obtained by subtracting the deviation En-1 previously calculated from the deviation En currently calculated. The control signal output to the inverter is determined according to the rotating speed variation Δf_C.

Then, the air conditioning control device 100 outputs the control signal determined as described above to the various air conditioning control equipments. Thereafter, a control routine of reading the detection signals and the operation signals, calculating the target blowing temperature TAO, determining the operating states of the various air conditioning control equipments, and outputting the control voltage and the control signal is repeated in the stated order for each of given control cycles until the operation stop of the vehicle air conditioning system 1 is requested by the operation panel. The repetition of the above routine is similarly conducted at other operation modes as a main routine of the air conditioning control according to this embodiment.

Therefore, in the heat pump cycle 10 in the cooling mode, a high-pressure high-temperature refrigerant compressed by the compressor 11 conducts heat exchange with a part of the blown air that has passed through the indoor evaporator 20 to heat the part of the blown air in the indoor condenser 12. Further, the refrigerant that has flowed out from the indoor condenser 12 flows into the outdoor heat exchanger 16 through the bypass passage 14, and conducts heat exchange with the outside air blown from the blowing fan 16a to radiate heat by the outdoor heat exchanger 16.

The refrigerant that has flowed out from the outdoor heat exchanger 16 flows into the cooling fixed throttle 18 through the three-way valve 17, and is then decompressed and expanded by the cooling fixed throttle 18. The low pressure refrigerant that has been decompressed by the cooling fixed throttle 18 flows into the indoor evaporator 20, and absorbs heat from the blown air which is blown from the blower 32, and then evaporates. The blown air that passes through the indoor evaporator 20 is cooled by the heat absorbing action of the refrigerant.

Then, as described above, a part of the blown air that has been cooled by the indoor evaporator 20 is heated by the indoor condenser 12 with the results that the blown air temperature TAV is adjusted to come closer to the target blowing temperature TAO to realize the cooling of the vehicle interior. Also, the refrigerant that has flowed out from the indoor evaporator 20 flows into the accumulator 19. A gas-phase refrigerant that has been separated from liquid-phase refrigerant by the accumulator 19 is drawn by the compressor 11, and again compressed.

### (b) Heating Mode

The heating mode starts when the heating mode is selected by a select switch in a state where the auto-switch of the operation panel turns on. In the heating mode, the air conditioning control device 100 closes the on/off valve 15, and controls the operation of the three-way valve 17 so as to connect the refrigerant outlet side of the outdoor heat exchanger 16 and the refrigerant inlet side of the accumulator 19. Further, the air conditioning control device 100 displaces the air mixture door 34 so that a total flow of the blown air that has passed through the indoor evaporator 20 flows into the indoor condenser 12.

With the above configuration, as indicated by the solid arrows in FIG. 1, the refrigeration cycle is configured in which the refrigerant circulates in the compressor 11, the indoor condenser 12, the heating fixed throttle 13, the outdoor heat exchanger 16 (the three-way valve 17), the accumulator 19, and the compressor 11 in the stated order. That is, the refrigeration cycle is configured in which the indoor condenser 12 is allowed to function as the radiator, and the outdoor heat exchanger 16 is allowed to function as the evaporator.

Also, in the heating mode, the air conditioning control device 100 determines the refrigerant discharge capacity of the compressor 11 as follows. In the heating mode, the air conditioning control device 100 determines a target high pressure PDO of the discharge refrigerant pressure Pd detected by the discharge pressure sensor on the basis of the target blowing temperature TAO with reference to the control map stored in the air conditioning control device 100 in advance.

Then, the air conditioning control device 100 calculates a deviation Pn (PDO-Pd) between the target high pressure PDO and the discharge refrigerant pressure Pd, and obtains a rotating speed variation Δf_H relative to a previous compressor rotating speed fHn-1 in conformity with a fuzzy inference based on a membership function and a rule which are stored in the air conditioning control device 100 in advance with the use of the deviation Pn(PDO-Pd) and a deviation variation rate Pdot (Pn-(Pn-1)) obtained by subtracting the deviation Pn-1 previously calculated from the deviation Pn currently calculated. The control signal output to the inverter is determined according to the rotating speed variation Δf_H.

Therefore, in the heat pump cycle 10 in the heating mode, the refrigerant compressed by the compressor 11 radiates heat to the blown air blown from the blower 32 by the indoor condenser 12. As a result, the blown air that passes through the indoor condenser 12 is heated to realize the heating of the vehicle interior. Also, the refrigerant that has flowed from the indoor condenser 12 is decompressed by the heating fixed throttle 13, and flows into the outdoor heat exchanger 16.

The refrigerant that has flowed into the outdoor heat exchanger 16 absorbs heat from the vehicle exterior air blown from the blowing fan 16a, and then evaporates. Also, the refrigerant that has flowed out from the outdoor heat exchanger 16 flows into the accumulator 19 through the three-way valve 17. A gas-phase refrigerant that has been separated from liquid-phase refrigerant by the accumulator 19 is drawn by the compressor 11, and again compressed.

### (c) Defrosting Mode

The defrosting mode starts if it is determined that the outdoor heat exchanger 16 is frosted in the heating mode. The determination of this frosting can be conducted by various techniques. For example, it may be determined that the outdoor heat exchanger 16 is frosted if the outdoor device temperature Ts detected by the outdoor heat exchanger temperature sensor becomes lower than or equal to a predetermined reference temperature (for example, 0°C).

In the defrosting mode, the air conditioning control device 100 opens the on/off valve 15, and controls the operation of the three-way valve 17 so as to connect the refrigerant outlet side of the outdoor heat exchanger 16 and the refrigerant inlet side of the accumulator 19. Further, the air conditioning control device 100 displaces the air mixture door 34 so that a total flow of the blown air that has passed through the indoor evaporator 20 bypasses the indoor condenser 12.

With the above configuration, as indicated by the double line arrows in FIG. 1, a hot gas cycle is configured in which the refrigerant circulates in the compressor 11 (indoor condenser 12, the bypass passage 14), the outdoor heat exchanger 16 (the three-way valve 17), the accumulator 19, and the compressor 11 in the stated order. Meanwhile, in the defrosting mode, since the blown air does not flow into the indoor condenser 12 by the action of the air mixture door 34, heat of refrigerant is not almost radiated in the indoor condenser 12.

Therefore, in the heat pump cycle 10 in the defrosting mode, the high-pressure high-temperature refrigerant compressed by the compressor 11 flows into the outdoor heat exchanger 16, and radiates heat. As a result, the outdoor heat exchanger 16 is heated to realize the defrosting of the outdoor heat exchanger 16. Also, the refrigerant that has flowed out from the outdoor heat exchanger 16 flows into the accumulator 19 through the three-way valve 17. A gas-phase refrigerant that has been separated from liquid-phase refrigerant by the accumulator 19 is drawn by the compressor 11.

The vehicle air conditioning system 1 according to this embodiment can realize the cooling and heating of the vehicle interior with the above operation, and can also defrost the outdoor heat exchanger 16 when the outdoor heat exchanger 16 is frosted.

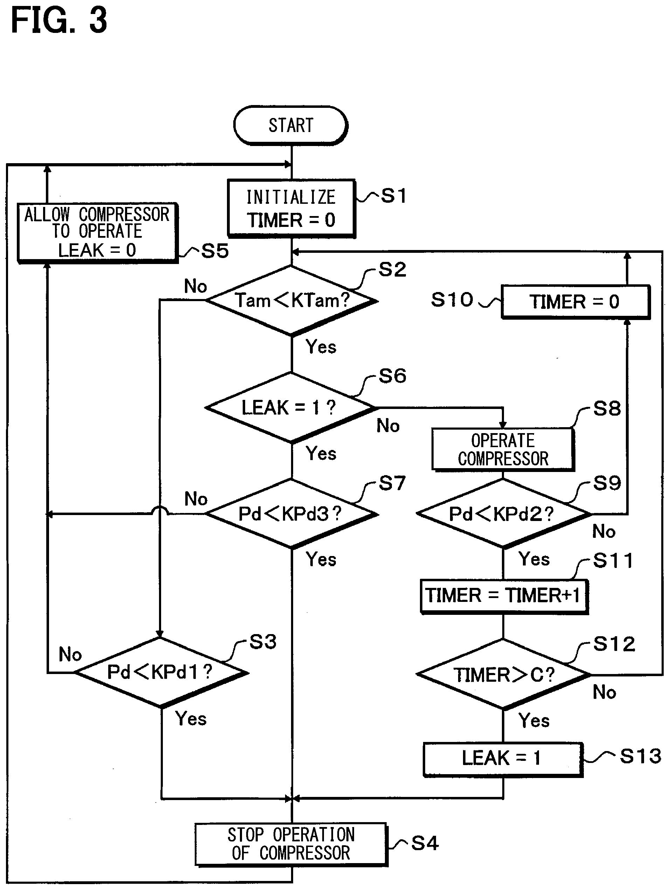

Further, in this embodiment, the air conditioning control device 100 executes the control flow illustrated in FIG. 3 as a subroutine of the above-mentioned main routine. In this subroutine, it is determined whether the flow rate of the refrigerant that circulates within the cycle is in the refrigerant shortage state where the refrigerant flow rate is as short as the duration life of the compressor 11 is adversely affected. If it is determined that the refrigerant is in the shortage state, the compressor 11 stops to protect the compressor 11.

As illustrated in FIG. 3, in S1 of the subroutine, a timer is initialized. Specifically, it is assumed that TIMER which is a timer flag is 0. In subsequent S2, it is determined whether the outside air temperature Tam is lower than the predetermined reference outside air temperature KTam (2°C in this embodiment), or not.

If it is determined that the outside air temperature Tam is lower than the reference outside air temperature KTam in S2, that is, if Tam≥KTam is satisfied, the flow proceeds to S3. It is determined whether the discharge refrigerant pressure Pd is lower than a predetermined first reference pressure KPd1, or not, in S3. The first reference pressure KPd1 is determined to a value lower than a saturated pressure of the refrigerant in the reference outside air temperature KTam. Further, in this embodiment, it is determined that the refrigerant is in the shortage state if the discharge refrigerant pressure Pd is lower than the first reference pressure KPd1.

The first reference pressure KPd1 used in S3 may be set to a value slightly higher than a determination value of the refrigerant shortage state as a determination value of no refrigerant shortage state, taking a hysteresis for control hunching prevention into consideration.

Therefore, if it is determined that the discharge refrigerant pressure Pd is lower than the first reference pressure KPd1 in S3, the flow proceeds to S4, and the operation of the compressor 11 stops, and the flow returns to S1. On the other hand, if the discharge refrigerant pressure Pd is not lower than the first reference pressure KPd1, that is, Pd≥KPd1 is satisfied in S3, it is determined that the refrigerant is not in the shortage state, and the flow proceeds to S5.

In S5, the operation of the compressor 11 in the mainroutine is permitted, and LEAK which is a flag indicating that the refrigerant flow rate becomes in the refrigerant shortage state is set 0, and the flow returns to S1. In this embodiment, the refrigerant becomes in the shortage state if LEAK=1 is satisfied, and the refrigerant is not in the shortage state if LEAK=0 is satisfied. That is, the air conditioning control device 100 according to this embodiment also functions as a refrigerant shortage storage unit that stores whether the heat pump cycle 10 is in the refrigerant shortage state, or not.

Also, if it is determined that the outside air temperature Tam is lower than the reference outside air temperature KTam in S2, the flow proceeds to S6, and it is determined whether the refrigerant flow rate is in the refrigerant shortage state, or not. Specifically, it is determined whether LEAK is 1, or not, in S6. If LEAK=1 is satisfied, and it is determined that the refrigerant flow rate is in the refrigerant shortage state in S6, the flow proceeds to S7.

In S7, it is determined whether the discharge refrigerant pressure Pd is lower than a predetermined third reference pressure KPd3, or not. In this embodiment, the same value as that of the first reference pressure KPd1 described in S3 is applied as the third reference pressure KPd3. It is needless to say that the first reference pressure KPd1 and the third reference pressure KPd3 may employ different values according to a use environment of the vehicle air conditioning system.

Then, if it is determined that the discharge refrigerant pressure Pd is lower than the third reference pressure KPd3 in S7, it is determined that the refrigerant flow rate is in the refrigerant shortage state, and the flow proceeds to S4. Then, the operation of the compressor 11 stops, and the flow returns to S1. On the other hand, if the discharge refrigerant pressure Pd is not lower than the third reference pressure KPd3, that is, Pd≥KPd3 is satisfied in S7, it is determined that the refrigerant flow rate is not in the refrigerant shortage state, and the flow proceeds to S5.

The third reference pressure KPd3 used in S7 may be set to a value slightly higher than a second reference pressure KPd2 used in S9 to be described later for control hunching prevention as described in S3.

Also, if LEAK=1 is not satisfied, and it is determined that the refrigerant flow rate is not in the refrigerant shortage state in S6, the flow proceeds to S8, and the compressor 11 operates. In S9, it is determined whether the discharge refrigerant pressure Pd is lower than the predetermined second reference pressure KPd2, or not.

If the discharge refrigerant pressure Pd is not lower than the second reference pressure KPd2, that is, Pd≥KPd2 is satisfied in S9, it is determined that the refrigerant flow rate is not in the refrigerant shortage state, and the flow proceeds to S10. In S10, TIMER is set to 0, and the flow returns to S2. On the other hand, if it is determined that the discharge refrigerant pressure Pd is lower than the second reference pressure KPd2 in S9, the flow proceeds to S11.

In S11, TIMER is incremented by 1. In subsequent S12, it is determined whether TIMER is larger than a predetermined reference count C, or not. If TIMER is not larger than the reference count C, the flow returns to S2. If TIMER is larger than the reference count C, the flow proceeds to S13, and proceeds to S4 as LEAK=1.

As apparent from the above description, in the control steps S2 to S3, in case where the outside air temperature Tam is equal to or higher than the reference outside air temperature KTam, when the high pressure side refrigerant pressure Pd is lower than the first reference pressure KPd1, it is determined that the refrigerant is in the shortage state.

Further, in the control steps S2, S6, and S8 to S12 in the stated order, in case where the outside air temperature Tam is lower than the reference outside air temperature KTam, if the high pressure side refrigerant pressure Pd is lower than the second reference pressure KPd2 in a state where the compressor 11 operates until a given time elapses (specifically, until TIMER becomes larger than the reference count C), it is determined that the refrigerant is in the shortage state.

That is, S2, S3, S6, and S8 to S12 configure a refrigerant shortage determination unit. Then, when it is determined by the refrigerant shortage determination unit that the refrigerant is in the shortage state, the compressor 11 is stopped in S4. Thus, the durability life of the compressor 11 is inhibited from being adversely affected by reducing the return amount of refrigerant oil.

Further, the refrigerant shortage determination unit according to this embodiment determines that the refrigerant is in the shortage state when the high pressure side refrigerant pressure Pd is lower than the second reference pressure KPd2 in a state where the compressor 11 operates, even at the low outside air temperature (specifically 0°C or lower) where the outside air temperature Tam is lower than the reference outside air temperature Tam. Therefore, in the heat pump cycle 10 according to this embodiment, when the high pressure side refrigerant pressure Pd is equal to or higher than second reference pressure KPd2, the blown air can be heated by operating the compressor 11 even at the low outside air temperature.

Also, in the heat pump cycle 10 according to this embodiment, when the outside air temperature Tam is in the range higher than or equal to -10°C and lower than or equal to 0°C, the blower control unit increases the blowing capacity of the blowing fan 16a. As a result, the refrigerant shortage determination unit can be restricted from erroneously determining the refrigerant shortage state.

In more detail, when the outside temperature in in the range about -10°C to 0°C, the outdoor heat exchanger 16 is likely to be frosted. Further, when the outdoor heat exchanger 16 is frosted, the refrigerant is cooled by the outdoor heat exchanger 16. In this case, the refrigerant shortage determination unit may erroneously determine that the refrigerant is in the shortage state.

On the contrary, according to this embodiment, at the outside air temperature Tam where the outdoor heat exchanger 16 is likely to be frosted, frosting can be suppressed by increasing the blowing capacity of the blowing fan 16a. Thus, the refrigerant shortage determination unit can be inhibited from erroneously determining that the refrigerant is in the shortage state.

Also, in the heat pump cycle 10 according to this embodiment, there is provided the refrigerant shortage storage unit that stores whether the refrigerant flow rate is in the refrigerant shortage state, or not. Also, as described in S6, when the refrigerant shortage storage unit stores that the refrigerant flow rate is in the refrigerant shortage state, there is no case in which the flow proceeds to S8 where the compressor 11 operates. Therefore, the compressor 11 is prevented from operating when the refrigerant flow rate is in the refrigerant shortage state, and the compressor 11 can be more effectively protected.

In other words, according to this embodiment, the heat pump cycle 10 includes
the refrigerant shortage storage unit (S13) that stores that it is determined by the refrigerant shortage determination unit (S2 to S12) that the refrigerant is in the shortage state.

The refrigerant shortage determination unit (S2 to S12)
determines that the refrigerant is in the shortage state when the high pressure side refrigerant pressure Pd from the discharge port of the compressor 11 to the inlet of the decompression unit 13 is lower than the predetermined first reference pressure KPd1 in case where the outside air temperature Tam is equal to or higher than the reference outside air temperature KTam, and
determines that the refrigerant is in the shortage state when the high pressure side refrigerant pressure Pd is lower than the second reference pressure KPd2 in a state where the compressor 11 operates in case where the outside air temperature Tam is lower than the reference outside air temperature KTam and where the refrigerant shortage storage unit does not store that it is determined that the refrigerant is in the shortage state.

Further, the refrigerant shortage determination unit
when the outside air temperature Tam is lower than the reference outside air temperature KTam, and when the refrigerant shortage storage unit stores that the refrigerant flow rate is in the refrigerant shortage state,
determines that the refrigerant is in the shortage state if the high pressure side refrigerant pressure Pd is lower than the third reference pressure KPd3 in the state where the compressor 11 does not operate and
determines that the refrigerant is not in the shortage state if the high pressure side refrigerant pressure Pd is equal to or higher than the third reference pressure KPd3 in the state where the compressor 11 does not operate.

In this situation, the third reference pressure KPd3 is set to be higher than the second reference pressure KPd2.

### (Other embodiments)

This invention is not limited to the above-mentioned embodiment, and may have various modifications as described below without departing from the scope of the invention as defined in the appended claims.

In the above-mentioned embodiment, the blower control unit increases the air flow rate (blowing capacity) of the blowing fan 16a when the outside air temperature Tam falls within the reference temperature range. Further, the blower control unit may increase the air flow rate of the blowing fan 16a with an increase in the heat load of the cycle.

In this example, when the heat load of the cycle is increased, there is a need to decrease the refrigerant evaporation temperature in the outdoor heat exchanger 16 in order to increase the amount of heat absorbed from the outside air by the refrigerant in the outdoor heat exchanger 16. Therefore, when the heat load of the cycle increases, the outdoor heat exchanger 16 is likely to be frosted. On the contrary, the outdoor heat exchanger 16 can be inhibited from being frosted by increasing the blowing capacity (blowing capacity) of the blowing fan 16a as the heat load of the cycle increases. Therefore, the refrigerant shortage determination unit can be inhibited from erroneously determining that the refrigerant is in the shortage state.

Further, specifically, in the case where a. the outside air temperature Tam is equal to or lower than the predetermined given value, b. the blown air temperature TAV is equal to or lower than the predetermined given value, c. the inside air temperature Tr is equal to or lower than the predetermined given value, and d. the blower motor voltage output to the electric motor of the blower 32 is equal to or higher than the predetermined given value, it is determined that the heat load of the cycle is high load, and the air flow rate of the blowing fan 16a may increase.

As a matter of course, it may be determined that the heat load of the cycle becomes high load in the case that all conditions of the above items a to d are satisfied, or it may be determined that the heat load of the cycle becomes high load in the case that at least one of the items a to d is satisfied.

Also, means for inhibiting the outdoor heat exchanger 16 from being frosted is not limited to an increase in the air flow rate of the blowing fan 16a when the outside air temperature Tam falls within the reference temperature range, or when the heat load of the cycle increases. At least one of the rotating speed of the compressor 11, and the air flow rate of the blower 32 may decrease, for example, when an operating condition is set to easily cause frosting in the outdoor heat exchanger 16, or when the frosting starts to be generated.

More specifically, the blower control unit that controls the operation of the blower 32 is provided, and the blower control unit may be configured to reduce the blowing capacity of the blower 32 when a temperature difference obtained by subtracting a temperature of the blown air which is heated by the indoor condenser 12 from a target temperature of the blown air becomes equal to or higher than a predetermined given temperature difference.

According to the above configuration, although the flow rate of the blown air is reduced, the temperature of the blown air heated by the indoor condenser 12 can increase. Therefore, the refrigerant evaporation pressure of the outdoor heat exchanger 16 can increase by reducing the refrigerant discharge capacity of the compressor 11, such that the outdoor heat exchanger 16 can be inhibited from being frosted.

Further, the target temperature of the blown air employs the target blowing temperature TAO described in the above embodiment, and the temperature of the blown air heated by the indoor condenser 12 may employ the blown air temperature TAV described in the above embodiment. Likewise, the compressor control unit may be configured to reduce the refrigerant discharge capacity of the compressor 11 when the temperature difference is equal to or higher than the predetermined given temperature difference.

In the above embodiment, the fixed values are applied as the first reference pressure KPd1 and the second reference pressure KPd2. However, KPd1 and KPd2 are not limited to those values. For example, KPd1 and KPd2 may be set to function values that change according to the outside air temperature Tam.

In the above embodiment, the heat pump cycle 10 in which the refrigeration circuits of the cooling mode, the heating mode, and the defrosting mode are switchable has been described. The heat pump cycle 10 may be configured to be operable by the refrigeration circuit in at least the operating mode that heats a fluid (blown air) to be heated.

In the above embodiment, the electric compressor is applied as the compressor 11. However, the type of the compressor 11 is not limited to this configuration. For example, the compressor 11 that obtains a driving force from an engine through a belt or an electromagnetic clutch may be applied.

Therefore, the application of the vehicle air conditioning system 1 according to this invention is not limited to an electric vehicle, but can be applied to a hybrid electric vehicle that obtains a travel driving force from both of an internal combustion engine (engine) and an electric motor for travel, or a normal vehicle that obtains the travel driving force from the internal combustion engine for travel.

In the above embodiment, the heat pump cycle 10 according to this invention is applied to the vehicle air conditioning system. However, the application of the heat pump cycle 10 according to this invention is not limited to this configuration. For example, the heat pump cycle 10 may be applied to a stationary air conditioning system. Further, the heat pump cycle 10 may be applied to a water heater that heats a tap water as the fluid to be heated.

## Claims

1. A heat pump cycle comprising:
a compressor (11) that compresses and discharges a refrigerant;
a heating heat exchanger (12) that heats fluid by exchanging heat between a high pressure refrigerant discharged from the compressor (11) and the fluid to be heated;
a decompression unit (13) that decompresses the refrigerant flowing out from the heating heat exchanger (12);
an outdoor heat exchanger (16) that evaporates a low pressure refrigerant decompressed by the decompression unit (13) by exchanging heat between the low pressure refrigerant and an outside air;
a refrigerant shortage determination unit (S2, S3, S6, S7, S8, S9) that determines that refrigerant is in shortage state in which a flow rate of refrigerant that circulates in the cycle is short; and
a compressor control unit (S4) that controls the operation of the compressor (11), **characterized in that**
the refrigerant shortage determination unit determines that refrigerant is in the shortage state when a high pressure side refrigerant pressure (Pd) between a refrigerant discharge port of the compressor (11) and an inlet of the decompression unit (13) is lower than a predetermined first reference pressure (KPd1) in case where an outside air temperature (Tam) is equal to or higher than a predetermined reference outside air temperature (KTam),
the refrigerant shortage determination unit determines that refrigerant is in the shortage state when the high pressure side refrigerant pressure (Pd) is lower than a predetermined second reference pressure (KPd2) in a state where the compressor (11) is operated in case where the outside air temperature (Tam) is lower than the reference outside air temperature (KTam), and
the compressor control unit reduces a refrigerant discharge capacity of the compressor (11) when the refrigerant shortage determination unit determines that refrigerant is in the shortage state,
the heat pump cycle further comprising:
a storage unit (S13) that stores whether refrigerant is in the shortage state or not, wherein
when the outside air temperature (Tam) is lower than the reference outside air temperature (KTam), and when the storage unit stores that refrigerant is in the shortage state, the compressor control unit does not operate the compressor,
the refrigerant shortage determination unit determines that refrigerant is in the shortage state when the high pressure side refrigerant pressure is lower than a predetermined third reference pressure (KPd3) in a state where the compressor is not operated, and
the refrigerant shortage determination unit determines that refrigerant is not in the shortage state when the high pressure side refrigerant pressure is equal to or higher than the predetermined third reference pressure (KPd3) in the state where the compressor is not operated.

2. The heat pump cycle according to claim 1, wherein the third reference pressure is set to be higher than the second reference pressure.

3. The heat pump cycle according to any one of claims 1 to 2, further comprising:
a blower (16a) that blows an outside air toward the outdoor heat exchanger (16); and
a blower control unit (100) that controls the operation of the blower (16a), wherein
the blower control unit increases a blowing capacity of the blower (16a) when the outside air temperature (Tam) falls within a predetermined reference temperature range.

4. The heat pump cycle according to any one of claims 1 to 3, further comprising:
a blower (16a) that blows an outside air toward the outdoor heat exchanger (16); and
a blower control unit (100) that controls the operation of the blower (16a), wherein
the blower control unit increases a blowing capacity of the blower (16a) with an increase in a heat load of the cycle.

5. The heat pump cycle according to any one of claims 1-4, further comprising: a storage unit (S13) that stores whether refrigerant is in the shortage state or not, wherein
the refrigerant shortage determination unit determines that refrigerant is not in the shortage state when the high pressure side refrigerant pressure is equal to or higher than the predetermined first reference pressure (KPd1) in case where the outside air temperature (Tam) is higher than or equal to the reference outside air temperature (KTam), and
the compressor control unit allows the compressor to operate and the storage unit stores that the refrigerant is not in the shortage state when the refrigerant shortage determination unit determines that refrigerant is not in the shortage state.

## Patentansprüche

1. Wärmepumpenkreislauf, der Folgendes umfasst:
einen Verdichter (11), der ein Kältemittel verdichtet und ausgibt;
einen Heizungswärmetauscher (12), der ein Fluid durch Austauschen von Wärme zwischen einem Hochdruckkältemittel aus dem Verdichter (11) und dem zu erwärmenden Fluid erwärmt;
eine Dekompressionseinheit (13), die das Kältemittel, das aus dem Heizungswärmetauscher (12) strömt, dekomprimiert;
einen Außenwärmetauscher (16), der ein Niederdruckkältemittel, das von der Dekompressionseinheit (13) dekomprimiert wurde, durch Austauschen von Wärme zwischen dem Niederdruckkältemittel und einer Außenluft verdampft;
eine Kältemittelmangelbestimmungseinheit (S2, S3, S6, S7, S8, S9), die bestimmt, dass Kältemittel in einem Mangelzustand ist, in dem eine Durchflussrate von Kältemittel, das im Kreislauf zirkuliert, gering ist; und
eine Verdichtersteuereinheit (S4), die den Betrieb des Verdichters (11) steuert, **dadurch gekennzeichnet, dass**
die Kältemittelmangelbestimmungseinheit in einem Fall, in dem eine Außenlufttemperatur (Tam) einer vorbestimmten Außenluftreferenztemperatur (KTam) gleich oder höher ist als diese, bestimmt, dass Kältemittel im Mangelzustand ist, wenn ein hochdruckseitiger Kältemitteldruck (Pd) zwischen einem Kältemittelauslassanschluss des Verdichters (11) und einem Einlass der Dekompressionseinheit (13) niedriger ist als ein vorbestimmter erster Referenzdruck (KPd1),
die Kältemittelmangelbestimmungseinheit in einem Fall, in dem die Außenlufttemperatur (Tam) niedriger ist als die Außenluftreferenztemperatur (KTam), bestimmt, dass Kältemittel im Mangelzustand ist, wenn der hochdruckseitige Kältemitteldruck (Pd) in einem Zustand, in dem der Verdichter (11) betrieben wird, niedriger ist als ein vorbestimmter zweiter Referenzdruck (KPd2), und
die Verdichtersteuereinheit eine Kältemittelauslasskapazität des Verdichters (11) verringert, wenn die Kältemittelmangelbestimmungseinheit bestimmt, dass Kältemittel sich im Mangelzustand befindet,
der Wärmepumpenkreislauf ferner Folgendes umfasst:
eine Speichereinheit (S13), die speichert, ob sich Kältemittel im Mangelzustand befindet oder nicht,
wobei
wenn die Außenlufttemperatur (Tam) niedriger ist als die Außenluftreferenztemperatur (KTam) und wenn die Speichereinheit speichert, dass sich das Kältemittel im Mangelzustand befindet, die Verdichtersteuereinheit den Verdichter nicht betreibt,
die Kältemittelmangelbestimmungseinheit bestimmt, dass Kältemittel im Mangelzustand ist, wenn der hochdruckseitige Kältemitteldruck in einem Zustand, in dem der Verdichter nicht betrieben wird, niedriger ist als ein vorbestimmter dritter Referenzdruck (KPd3), und
die Kältemittelmangelbestimmungseinheit bestimmt, dass Kältemittel nicht im Mangelzustand ist, wenn der hochdruckseitige Kältemitteldruck in dem Zustand, in dem der Verdichter nicht betrieben wird, dem vorbestimmten dritten Referenzdruck (KPd3) gleich oder höher ist als dieser.

2. Wärmepumpenkreislauf nach Anspruch 1, wobei der dritte Referenzdruck höher eingestellt ist als der zweite Referenzdruck.

3. Wärmepumpenkreislauf nach einem der Ansprüche 1 bis 2, der ferner Folgendes umfasst:
ein Gebläse (16a), das eine Außenluft zum Außenwärmetauscher (16) bläst; und
eine Gebläsesteuereinheit (100), die den Betrieb des Gebläses (16a) steuert,
wobei
die Gebläsesteuereinheit eine Blaskapazität des Gebläses (16a) erhöht, wenn die Außenlufttemperatur (Tam) innerhalb eines vorbestimmten Referenztemperaturbereichs fällt.

4. Wärmepumpenkreislauf nach einem der Ansprüche 1 bis 3, der ferner Folgendes umfasst:
ein Gebläse (16a), das eine Außenluft zum Außenwärmetauscher (16) bläst; und
eine Gebläsesteuereinheit (100), die den Betrieb des Gebläses (16a) steuert,
wobei
die Gebläsesteuereinheit eine Blaskapazität des Gebläses (16a) mit einer Erhöhung einer Wärmelast des Kreislaufs erhöht.

5. Wärmepumpenkreislauf nach einem der Ansprüche 1-4, der ferner Folgendes umfasst:
eine Speichereinheit (S13), die speichert, ob sich Kältemittel im Mangelzustand befindet oder nicht, wobei
die Kältemittelmangelbestimmungseinheit in einem Fall, in dem die Außenlufttemperatur (Tam) höher als die Außenluftreferenztemperatur (KTam) oder dieser gleich ist, bestimmt, dass Kältemittel nicht im Mangelzustand ist, wenn der hochdruckseitige Kältemitteldruck dem vorbestimmten ersten Referenzdruck (KPd1) gleich oder höher ist als dieser, und
die Verdichtersteuereinheit es erlaubt, dass der Verdichter betrieben wird, und die Speichereinheit speichert, dass sich das Kältemittel nicht im Mangelzustand befindet, wenn die Kältemittelmangelbestimmungseinheit bestimmt, dass Kältemittel nicht im Mangelzustand ist.

## Revendications

1. Cycle de pompe à chaleur comprenant :
un compresseur (11) qui compresse et décharge un réfrigérant ;
un échangeur de chaleur chauffant (12) qui chauffe le fluide en échangeant la chaleur entre un réfrigérant haute pression déchargé du compresseur (11) et le fluide à chauffer ;
une unité de décompression (13) qui décompresse le réfrigérant s'écoulant hors de l'échangeur de chaleur chauffant (12) ;
un échangeur de chaleur extérieur (16) qui évapore un réfrigérant basse pression décompressé par l'unité de décompression (13) en échangeant la chaleur entre le réfrigérant basse pression et un air extérieur ;
une unité de détermination de pénurie de réfrigérant (S2, S3, S6, S7, S8, S9) qui détermine que le réfrigérant est dans un état de pénurie dans lequel un débit du réfrigérant qui circule dans le cycle, s'épuise ; et
une unité de commande de compresseur (S4) qui commande le fonctionnement du compresseur (11), **caractérisé en ce que** :
l'unité de détermination de pénurie de réfrigérant détermine que le réfrigérant est à l'état de pénurie lorsqu'une pression de réfrigérant du côté de la haute pression (Pd) entre un orifice de décharge de réfrigérant du compresseur (11) et une entrée de l'unité de décompression (13) est inférieure à une première pression de référence (KPd1) prédéterminée dans le cas dans lequel une température d'air extérieur (Tam) est égale ou supérieure à une température d'air extérieur de référence (KTam) prédéterminée,
l'unité de détermination de pénurie de réfrigérant détermine que le réfrigérant est à l'état de pénurie lorsque la pression de réfrigérant du côté de la haute pression (Pd) est inférieure à une deuxième pression de référence (KPd2) prédéterminée dans un état dans lequel le compresseur (11) est actionné dans le cas dans lequel la température d'air extérieur (Tam) est inférieure à la température d'air extérieur de référence (KTam), et
l'unité de commande de compresseur réduit une capacité de décharge de réfrigérant du compresseur (11) lorsque l'unité de détermination de pénurie de réfrigérant détermine que le réfrigérant est à l'état de pénurie,
le cycle de pompe à chaleur comprenant en outre :
une unité de stockage (S13) qui stocke si le réfrigérant est à l'état de pénurie ou pas,
dans lequel :
lorsque la température d'air extérieur (Tam) est inférieure à la température d'air extérieur de référence (KTam), et lorsque l'unité de stockage stocke le réfrigérant qui est à l'état de pénurie, l'unité de commande de compresseur n'actionne pas le compresseur,
l'unité de détermination de pénurie de réfrigérant détermine que le réfrigérant est à l'état de pénurie lorsque la pression de réfrigérant du côté de la haute pression est inférieure à une troisième pression de référence (KPd3) prédéterminée dans un état dans lequel le compresseur ne fonctionne pas, et
l'unité de détermination de pénurie de réfrigérant détermine que le réfrigérant n'est pas à l'état de pénurie lorsque la pression de réfrigérant du côté de la haute pression est égale ou supérieure à la troisième pression de référence (KPd3) prédéterminée à l'état dans lequel le compresseur ne fonctionne pas.

2. Cycle de pompe à chaleur selon la revendication 1, dans lequel la troisième pression de référence est déterminée pour être supérieure à la deuxième pression de référence.

3. Cycle de pompe à chaleur selon l'une quelconque des revendications 1 à 2, comprenant en outre :
une soufflante (16a) qui souffle un air extérieur vers l'échangeur de chaleur extérieur (16) ; et
une unité de commande de soufflante (100) qui commande le fonctionnement de la soufflante (16a),
dans lequel :
l'unité de commande de soufflante augmente une capacité de soufflage de la soufflante (16a) lorsque la température d'air extérieur (Tam) est dans une plage de température de référence prédéterminée.

4. Cycle de pompe à chaleur selon l'une quelconque des revendications 1 à 3, comprenant en outre :
une soufflante (16a) qui souffle un air extérieur vers l'échangeur de chaleur extérieur (16) ; et
une unité de commande de soufflante (100) qui commande le fonctionnement de la soufflante (16a),
dans lequel :
l'unité de commande de soufflante augmente une capacité de soufflage de la soufflante (16a) avec une augmentation d'une charge thermique du cycle.

5. Cycle de pompe à chaleur selon l'une quelconque des revendications 1 à 4, comprenant en outre : une unité de stockage (S13) qui stocke si le réfrigérant est à l'état de pénurie ou pas, dans lequel :
l'unité de détermination de pénurie de réfrigérant détermine que le réfrigérant n'est pas à l'état de pénurie lorsque la pression de réfrigérant du côté de la haute pression est égale ou supérieure à la première pression de référence (KPd1) prédéterminée dans le cas dans lequel la température d'air extérieur (Tam) est supérieure ou égale à la température d'air extérieur de référence (KTam), et
l'unité de commande de compresseur permet au compresseur de fonctionner et l'unité de stockage stocke le réfrigérant qui n'est pas à l'état de pénurie lorsque l'unité de détermination de pénurie de réfrigérant détermine que le réfrigérant n'est pas à l'état de pénurie.
